# EUROPEAN PATENT APPLICATION

(11) **EP 2 624 504 A1**
(43) Date of publication of application: **07.08.2013**
(21) Application number: 13153944.7
(22) Date of filing: 05.02.2013
(51) Int. Cl.: H04L 12/28

(54) **Scalable media converter for use in a multi-dwelling unit**

(30) Priority: 06.02.2012 NL 2008238
(71) Applicant: Genexis Holding B.V., 5652 AC Eindhoven (NL)
(72) Inventor: Van Den Hoven, Gerard Nicolaas, 6105 BP Maria Hoop (NL); De Laat, Maurice Martinus, 6021 ZS Budel (NL)
(74) Representative: Willekens, Jeroen Pieter Frank

(57) **Abstract**

The invention relates to a communication device (1, 1') for coupling a plurality of optical communication cables (PFC) into a plurality of dedicated 1-to-1 electrical communication lines (PTP, PCX) for respective individual units (IU) in a multi-dwelling unit (MD) with a shared central connection point (SCCP). The communication device (1, 1') comprises: i) at least two optical inputs (OI); and ii) at least two electrical outputs (EO, EO'). Each respective optical input (OI) is associated with at maximum one of the electrical outputs (EO, EO') and each respective electrical output (EO, EO') is associated with at maximum one of the optical inputs (OI) to obtain respective associated input-output couples. Furthermore between each associated input-output couple there is provided a converter circuit (O/E, MC, VDSLC). The invention provides a very simple, cheap, scalable high-bandwidth communication solution for multi-dwelling units, wherein existing dedicated electrical communication lines are effectively used for this purpose. Preferably, the communication device is a modular device comprising at least one coverter module having at least one of the input-output couples and at least one of the converter circuits. Preferably, the converter module further comprises at least one merger circuit for merging a further electrical signal on a respective electrical input with the respective single electrical output signal.

## Description

### FIELD OF THE INVENTION

The invention relates to a communication device for coupling a plurality of optical communication cables into a plurality of dedicated 1-to-1 electrical communication lines for respective individual units in a multi-dwelling unit. In such a multi-dwelling unit the plurality of dedicated 1-to-1 electrical communication lines are provided between the respective individual units and a shared central connection point for the multi-dwelling unit. The invention further relates to a connection system comprising such a connection device, and to a multi-dwelling unit comprising such connection device. The invention also relates to a method of upgrading a multi-dwelling unit.

### BACKGROUND OF THE INVENTION

Various types of multi-dwelling units are known, such as terrace houses (or row houses), deck access flats, tenement flats/houses, apartment complexes, etcetera. Single units within such buildings, may be defined as living units, but also storage units, business accommodations such as consulting rooms. For all such units separate dedicated 1-to-1 electrical communication/information networks are required, such as telephone lines, television cables, internet lines, etcetera. Often multiple of such lines are available (i.e. both coax for TV and twisted pair for telephone). Sometimes such lines are even shared amongst different communication functions (i.e. twisted pair for both telephone and internet). In a multi-dwelling unit it is quite common that there is a shared central connection point for all these electrical communication lines/networks. Such central communication point may be a control box, control unit, or district station located outside the premises of the multi-dwelling unit or in a space underneath the multi-dwelling unit for example. The drawback of the existing electrical communication lines, for example ADSL, VDSL (twisted pair cable), DOCSIS 3.0 (coax cable) is that the maximum bandwidth over a certain predefined length is limited. A possible way out is to use optical communication cables such as glass fibre cables which offers extremely high bandwidths. In case of single-dwelling units this can be implemented relatively easily, because the glass fibre cable can be routed to the unit. In case of bigger existing buildings having multiple units inside which all have dedicated electrical communication lines to a shared central communication point, such upgrade operation is much more complex and above-that very expensive. This problem is particularly relevant for multi-dwelling units up to 20 units. This led to the idea of reusing the existing electrical communication lines for the purpose of implementing a high-bandwidth glass communication line to the units. A single glass fibre is routed to the shared central communication point, where a so-called DSLAM (Digital Subscriber Line Access Multiplier) device is installed to provide multiple high-bandwidth outputs, one of each individual unit and coupled to the existing electrical communication lines.

A drawback of the known high-bandwidth solution for multi-dwelling units is that the DSLAM is very complex, costly, consumes a lot of power requiring special expensive cooling techniques, and requires a lot of active administration and maintenance to be carried out by a service man. Furthermore, a DSLAM is not a very flexible solution in terms of number of slots. Smaller DSLAM suffer from the same problems.

### SUMMARY OF THE INVENTION

It is an object of the invention to provide an alternative solution for the DSLAM, which solves the above-mentioned problems.

According to a first aspect of the invention the object is achieved with the communication device as claimed in claim 1. According to a second aspect of the invention the object is achieved with a connection system as claimed claim 16. According to a third aspect of the invention the object is achieved with a multi-dwelling unit as claimed claim 18. According to a fourth aspect of the invention the object is achieved with a method of upgrading a multi-dwelling unit as claimed in claim 19.

An effect of the communication device according to the invention is as follows. The communication device comprises a plurality of optical inputs for being coupled to a plurality of optical communication cables, such as glass fibre cables. In other words, instead of routing a single glass fibre cable to the shared central communication point, a bundle of glass fibre cables may be routed to the central points, one per individual unit within the multi-dwelling unit. Routing multiple optical fibre cables to the central communication point is much easier than routing the optical fibre cables to each of the individual units. Furthermore, the communication device comprises a plurality of optical outputs for being coupled into a respective one of the plurality of dedicated 1-to-1 electrical communication lines, wherein the dedicated 1-to-1 electrical communication lines are routed from each of the individual units to the shared central communication point (there may be more than 1 dedicated line per individual unit). Each input is associated with at maximum one output and each output is associated with at maximum one input. This implies a unique mapping of inputs to outputs and vice versa, which results in maximum parallelism in terms of required functions between said inputs and outputs. Each input/output couple is now only provided with a converter circuit which only needs to perform a simple media conversion, instead of a complex apparatus such as a DSLAM.

In order to facilitate the understanding of the invention a few expressions are defined hereinafter.

In this description the term "couple into" refers to merging a respective communication signal of one communication line, i.e. the optical communication line, with the communication signal of another communication line, i.e. the dedicated 1-to-1 electric communication line, such as a coax cable or a twisted-pair cable. Here, merging means either time-multiplexing, frequency-multiplexing or hybrid forms. This may be done using a merger circuit. Yet, in the situation where the service over the existing dedicated 1-to-1 electrical communication line is not maintained, the term "couple into" may be broader, i.e. it includes the situation, where the electrical outputs of the communication module is directly routed to the respective individual units in the multi-dwelling unit, without the need for a merger circuit.

In this description the term media conversion refers to converting a communication signal using one communication protocol, such as the Ethernet protocol according to IEEE 802.3 100baseBX10 (Clause 58) or 1000baseBX10 (Clause 59) in glass fibre cables, into a communication signal using another communication protocol, such as the Ethernet protocol according to IEEE 802.3 100baseTX (Clause 25) or 1000baseT (Clause 40). A media converter is a device or circuit performing media conversion. A chip performing media conversion is typically called a PHY. The device performing the optical-to-electrical conversion is typically called a transceiver.

In this description the term "electrical communication lines" should be interpreted broadly. The word line does is not restricted to a communication over one physical wire. In this description the word communication network is also used to indicate the same thing. What is important is that it is a point-to-point or node-to-node communication network, which provides a dedicated electrical connection between the respective individual unit and the shared central communication point.

In this description it must be understood that with communication it is generally meant bidirectional communication, unless such interpretation would render the technical teaching absurd or technically unfeasible. In any case this also implies that whenever the term "input" is used, such term must be interpreted broadly such that the respective port or terminal has an input function in a certain time frame. In may thus also perform an output function, in case the communication is in the opposite direction. Alternatively, this also implies that whenever the term "output" is used, such term must be interpreted broadly such that the respective port or terminal has an output function in a certain time frame. In may thus also perform an output function, in case the communication is in the opposite direction.

In an embodiment of the communication device in accordance with the invention the respective associations between respective optical inputs and respective electrical outputs are fixed to obtain fixed associated input-output couples. This is a very advantageous group of embodiments, because it renders the device even simpler. Fixing the association between ports renders the device more modular (by assigning a specific input-output couple or number of couples per module) and thereby more scalable and flexible in terms of the number of individual units to be provided with high-bandwidth communication.

In an embodiment of the communication device in accordance with the invention the communication device is a modular device comprising at least one converter module, wherein the respective converter module comprises at least one of the input-output couples and at least one of the converter circuits. This embodiment is advantageous, because it is fully modular and comprises converter modules. The number of converter modules may be adapted to the number of individual units in the multi-dwelling device. Each converter module may comprise one or more optical inputs, and may be connected to an equal number of optical communication cables. This embodiment of invention has additional advantages. First of all, this embodiment fulfills a need for ease of maintenance. Repairing a connection or replacing a device is simple since all connections are 1-to-1. This may be simply established by replacing the broken converter module with another one.

In an embodiment of the communication device in accordance with the invention each converter circuit in the converter module comprises a respective optical-to-electrical converter coupled to the respective optical input and a respective media converter coupled to a respective output of the respective optical-to-electrical converter. The optical-to-electrical converter is only required to convert the optical signal on the optical communication cable into an electrical signal, which may be further processed (media converted) in the converter circuit.

In an embodiment of the communication device in accordance with the invention the respective converter circuit further comprises a VDSL converter coupled to respective output of the media converter for converting the signal into a VDSL signal. The advantage of this embodiment is that it renders the communication device suitable for coupling the optical communication line into twisted pair connections. VDSL stands for Very high bitrate Digital Subscriber Line. Twisted pair connections are quite often readily available in today's houses. For other electrical communication lines VDSL conversion is not essential. In an embodiment the media conversion is also performed by the VDSL converter. Expressed differently, the media converter and the converter circuits may be combined into one circuit. This statement applies to all applicable embodiments discussed in this description.

In an embodiment of the communication device in accordance with the invention the respective converter module comprises at least one electrical input and at least one merger circuit, wherein the respective merger circuit comprises inputs coupled to the respective electrical input and to the respective media converter for merging an electrical signal on the respective electrical input with the respective single electrical output signal. This embodiment is very advantageous, because it eases the coupling of the optical communication line into the dedicated 1-to-1 electrical communication line. The existing dedicated 1-to-1 electrical communication line may now be coupled to the electrical input and is subsequently merged with the optical communication inside the converter module. Then, all what is required is to couple the output of the converter module to the respective individual unit of the multi-dwelling unit. Yet, there may be situations, where the service over the existing dedicated 1-to-1 electrical communication line is not maintained. In such situation the respective merger circuits are not required at all. This statement applies to all applicable embodiments in this description.

An embodiment of the communication device in accordance with the invention comprises one electrical input provided per optical input. Alternatively, the communication device of the invention comprises an electrical input for a selection of the optical inputs only. Different types of converter modules may be implemented in the same communication device, i.e. converter modules with electrical input, and converter modules without electrical input. As an alternative solution, for those converter modules having no electrical input, the merging of the respective communication lines may also be implemented using separate, external merger circuits.

An embodiment of the communication device in accordance with the invention further comprises a further optical input for being coupled with a further optical communication cable carrying a CATV signal, a further optical-to-electrical converter coupled to the further optical input and a plurality of further electrical outputs coupled to an output of the optical-to-electrical converter. This is a very advantageous embodiment, because it facilitates to bring in a CATV signal using an optical communication cable. Such CATV signals are usually brought to the homes using a coax cable, and the routing of an optical communication cable to the multi-dwelling unit constitutes an interesting competitive solution for the coax cable. Moreover, the invention is particularly advantageous for those units which do not have a coax connection at all.

In a first variant of last mentioned embodiment the invention the further optical input, the further optical-to-electrical converter, and the plurality of further electrical outputs are integrated into a dedicated CATV module. In a second variant of last mentioned embodiment the invention the further optical input, the further optical-to-electrical converter, and the plurality of further electrical outputs are integrated into one of the converter modules.

In an embodiment of the communication device in accordance with the invention at least one of the further electrical outputs is coupled to a respective one of the respective electrical input of the respective converter module. This embodiment is advantageously combined with embodiments of the communication device having converter modules with electrical inputs. The CATV signal from the further optical input is conveniently coupled to the electrical input of the respective converter module, thus merging CATV with the other signal on the dedicated 1-to-1 electrical communication line.

In a first variant of last-mentioned embodiment of the communication device in accordance with the invention each electrical input of the converter modules is coupled to a respective further electrical output. In a second variant of last-mentioned embodiment of the communication device in accordance with the invention only part of the electrical inputs of the converter modules are coupled to a respective further electrical output.

In an embodiment of the communication device in accordance with the invention the converter module comprises one input-output couple and one converter circuit.

In an embodiment of the communication device in accordance with the invention the converter module comprises four input-output couples and four converter circuits.

In an embodiment of the communication device in accordance with the invention the converter modules comprises any number of input-output couples with corresponding converter circuits per converter module.

An embodiment of the communication device in accordance with the invention further comprises a power supply module for supplying power to the plurality of converter modules. Providing the power supply function of the communication module as a separate module makes the communication device even more scalable.

An embodiment of the communication device in accordance with the invention further comprises an optical fibre routing module having an optical input for being coupled to a further respective one of the plurality of optical communication cables, and an optical output associated with the optical input, wherein the optical input is coupled to the optical output. This embodiment is advantageous in case it has become feasible to route an optical communication cable to a respective one of the plurality of individual units. If such situation occurs later on, a respective converter module may be simply replaced by the optical fiber routing module of this embodiment, which only functions as a pass-through module. Thus all what is required to bring fibre to the homes is to connect an optical fibre to the optical outputs of the optical fibre routing module and route it to the respective individual unit.

An embodiment of the communication device in accordance with the invention further comprises a mounting rail having slots onto which the respective converter modules are mounted. This embodiment is advantageous, because it facilitates easy addition and removal of the respective converter modules.

In an embodiment of the communication device in accordance with the invention respective ones of the electrical outputs are selected from a twisted-pair connector, coax connector, and a CATSE/Ethernet connector. These electrical outputs are the most commonly used ones. It must be stressed, however, that the invention is not limited to such standard connectors.

In an embodiment of the communication device in accordance with the invention respective ones of the at least one electrical input are selected from a twisted-pair connector and a coax connector.

In an embodiment of the communication device in accordance with the invention the number of input-output couples is between 2 and 20, and preferably between 2 and 12. In comparison with the prior art solutions, the invention is particularly economically feasible in case of multi-dwelling units having a number individual units in the here mentioned range, albeit that even outside this range the invention provides advantages. Statistical research has shown that most family houses or single dwelling units form part of a so-called multi-dwelling unit having less than 12 units. The invention particularly minimizes costs in such situations.

In a second aspect, the invention relates to connection system as claimed in claim 16. It has been mentioned earlier and is repeated here that, in the situation where the service over the existing dedicated 1-to-1 electrical communication line is maintained, the merger circuits may be integrated into the respective converter modules, provided as external components, or both. In the situation where the service over the existing dedicated 1-to-1 electrical communication line is not maintained, the merger circuits may be dispensed with.

In an embodiment of the connection system, the coupling of the plurality of optical communication cables (PFC) into the plurality of dedicated 1-to-1 electrical communication lines (PTP, PCX) is done via respective merger circuits (FFtr') in the communication device (1, 1'), if present, or else, being provided as an external components (FFtr).

In a third aspect, the invention relates to a multi-dwelling unit as claimed in claim 18. The invention clearly increases the satisfaction level of users of the multi-dwelling units which comprise the communication device of the invention. High-bandwidth connections are provided to the individual units effectively reusing the existing local networks to the maximum and providing a very scalable and flexible solution.

In a fourth aspect, the invention relates to a method of upgrading a multi-dwelling unit as claimed in claim 19. Existing multi-dwelling units maybe conveniently upgraded using the method of the invention, which also falls within the scope of the invention as claimed.

An embodiment of the method of upgrading a multi-dwelling unit further comprises:
- providing a plurality of external merger circuits in case not present as internal merger circuits in the communication device,
and the coupling of the electrical outputs of the communication device into the respective electrical communication lines is done via the respective internal or external merger circuits.

### BRIEF DESCRIPTION OF THE DRAWINGS:

These and other aspects of the invention are apparent from and will be elucidated with reference to the embodiments described hereinafter.

In the drawings:
Fig. 1 shows a multi-dwelling unit as known from the prior art;
Fig. 2 shows another multi-dwelling unit as known from the prior art;
Fig. 3 shows a first multi-dwelling unit in accordance with an embodiment of the invention;
Fig. 4 shows a first communication device in accordance with an embodiment of the invention;
Fig. 5 shows a second communication device in accordance with another embodiment of the invention;
Fig. 5a shows a frequency overview of a CATV signal that is merged with an Ethernet signal on a signal communication line;
Fig. 6 shows a second multi-dwelling unit in accordance with another embodiment of the invention;
Fig. 6a shows a frequency overview of a PSTN signal that is merged with a DSL signal over single communication line;
Fig. 7 shows a third communication device in accordance with another embodiment of the invention;
Fig. 8 shows a fourth communication device in accordance with another embodiment of the invention;
Fig. 9 shows a fifth communication device in accordance with another embodiment of the invention;
Fig. 10 shows a sixth communication device in accordance with another embodiment of the invention, and
Fig. 11 shows a possible implementation of a connection system comprising a connection device similar to Fig. 8 and an analog CATV module similar to Fig. 9.

The figures are purely diagrammatic and not drawn to scale. Particularly for clarity, some dimensions are exaggerated strongly. Similar components in the figures are denoted by the same reference numerals as much as possible.

### List of reference numerals:

- MD: multi-dwelling unit
- IU: individual units in multi-dwelling unit
- TV: respective television connections in individual units
- PH: respective phone connections in individual units
- SSCP: shared central communication point
- TPB: twisted-pair bundle routed to the shared central communication point
- CX: coax cable routed to the shared central communication point
- PW: patchwork
- SPLTR: coax connection splitter
- PTP: plurality of twisted-pair cables
- PCX: plurality of coax cables
- DT: data connection in individual units (i.e. Internet connection)
- 10: respective modems in individual units
- 50: further frequency filters
- OFC: optical fibre cable
- OTU: optical termination unit
- 100: DSLAM
- FFTR: merger circuit/frequency filter
- FRPRTS: unused ports
- OFCB: optical fibre cable bundle
- OUT': optical termination unit for multiple cables
- PFC: plurality of optical fibre cables
- 1: communication device
- 1MOD: 1-to-1 converter module
- OI: optical input
- EO: electrical output
- O/E: optical-to-electrical converter
- MC: media converter
- PS: power supply module
- RL: mounting rail
- SLT: slot
- 1MOD': alternative 1-to-1 converter module having integrated merger circuit/frequency filter
- EI': coax input
- EO': coax output
- FFtr': integrated merger circuit/frequency filter
- ETHRNT: Ethernet frequency band
- CATVB: analog television signal frequency band
- Trnsm: transmission
- Freq: frequency
- 1': alternative communication device
- VDSLC: VDSL converter
- PSTN: public switched telephone network
- UPSTR: upstream frequency band
- DWNSTR: downstream frequency band
- 4MOD: 4-to-4 converter module
- 4MOD': alternative 4-to-4 converter module having integrated merger circuit/frequency filter
- CTVM: CATV module
- OI": further optical input for receiving optical CATV signal
- O/E": further optical-to-electrical converter
- DRV: output driver
- EO": further electrical outputs
- OMOD: fibre routing module
- OO: optical output
- MNS: mains
- PLG: power plug
- FMGT: fibre management module

### DETAILED DESCRIPTION OF EMBODIMENTS:

The context of the invention is that of multi-dwelling units which need to be upgraded with high-bandwidth communication. Such multi-dwelling units typically have a shared central communication point. The invention conveniently provides a solution for high-bandwidth communication at this location, offering the great advantage that the upgrading can be done without requiring entering the premises of the respective owners of the individual units.

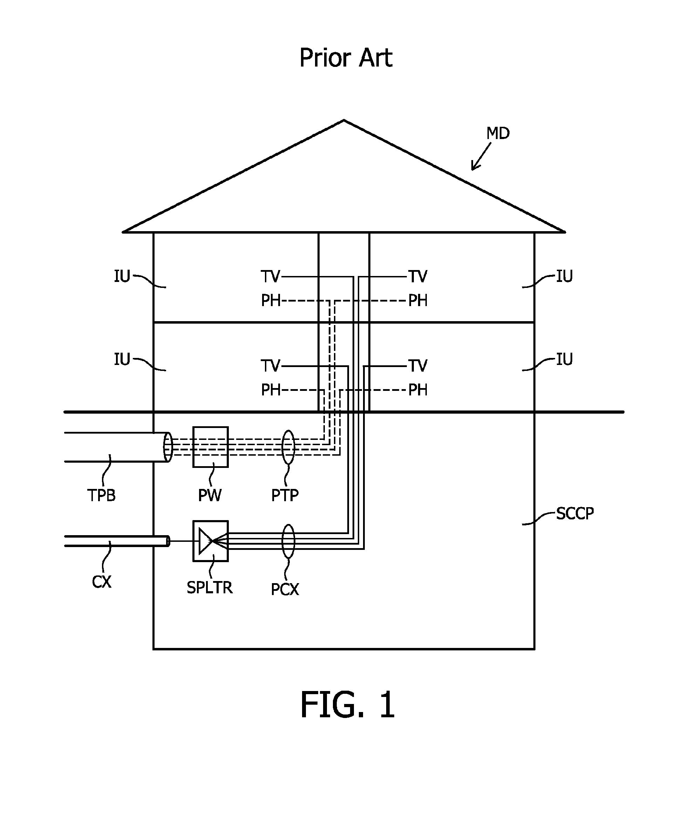

Fig. 1 shows a multi-dwelling unit MD as known from the prior art. The multi-dwelling unit MD comprises four individual units IU (also being referred to as single-dwelling units or family houses). This is just an example; there may be any number of individual units IU above 1. Every individual unit IU can comprise both a dedicated television connection TV and a dedicated phone connection PH. The television connection TH may be a coax cable connection and the phone connection PH may be a twisted-pair cable connection for example. What is important is that there is shared central communication point SCCP to which these connections TV and PH are routed for communication with the outside world. The shared central communication point SCCP may be located in a shared room (for example the cellar) in the multi-dwelling unit, in a shared meter cupboard (internal or external). In this example from the outside-world a twisted-pair bundle TPB is routed to the shared central communication point SCCP and connected to a patchwork PW. From the patchwork PW a plurality of twisted-pair cables PTP is routed to the respective individual units IU. Furthermore, in this example a single coax cable is routed from the outside world to the shared central communication point SCCP and connected to a coax connection splitter SPLTR. The coax connection splitter SPLTR is subsequently connected to the respective individual units IU via a plurality of coax cables PCX. Fig. 1 thus shows a multi-dwelling unit MD in which all individual unit IU have two dedicated electrical communication lines, namely both analogue telephone PH (via twisted-pair) and TV (via COAX). The general idea was to re-use at least one of those two connections for high-bandwidth communication with the outside world.

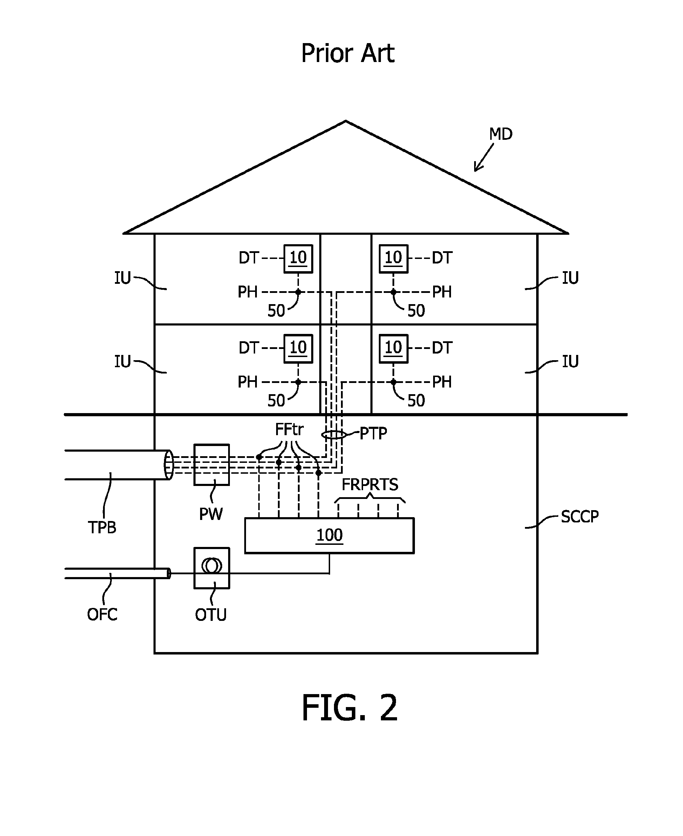

Fig. 2 shows another multi-dwelling unit as known from the prior art, wherein one of the dedicated connections is used for high-bandwidth communication. The figure will be discussed in as far as it differs from Fig. 1. In order to facilitate understanding of the figure only one dedicated electrical communication line has been drawn, namely the telephone line PH. A high-bandwidth optical communication cable, i.e. an optical fibre cable OFC, is routed from the outside world to the shared central communication point SCCP. The optical fibre cable OFC is routed to an optical termination unit OTU and subsequently coupled into a so-called DSLAM 100 (Digital Subscriber Line Access Multiplier), wherein the DSLAM 100 comprises electronics (and/or software) to distributed the broadband information stream on the optical fibre cable OFC over the (connected) outputs. While doing so the DSLAM 100 converts the signal into the so-called VDSL protocol (Very high Digital Subscriber Line), which renders the signal suitable for being transmitted over twisted-pair cables. The VDSL signal on the outputs of the DSLAM is subsequently coupled into the dedicated plurality of twisted-pair connections PTP via merger circuits, which are generally frequency filters FFTR. In this manner the original analog phone signal can be transmitted to the respective individual units IU together with the VDSL signal. In order to be able to separate said signals in the individual units IU respective further frequency filters 50 are provided in each unit. Subsequently, the VDSL signal is fed into a modem 10 to convert it into signals which can be used by the end-user, hereby establishing a data connection DT in each individual unit IU.

As was already mentioned earlier, the DSLAM 100 suffers from severe drawbacks, one of which is the lack of scalability. Typical DSLAM units have 8, 12 or more output ports, which often results in unused ports FTPRTS as illustrated in Fig. 2. Furthermore, the DSLAM requires quite some maintenance and administration for part of which even access to the respective individual units may be required. The invention conveniently tackles these problems as will be elaborated upon in description of the drawings hereinafter.

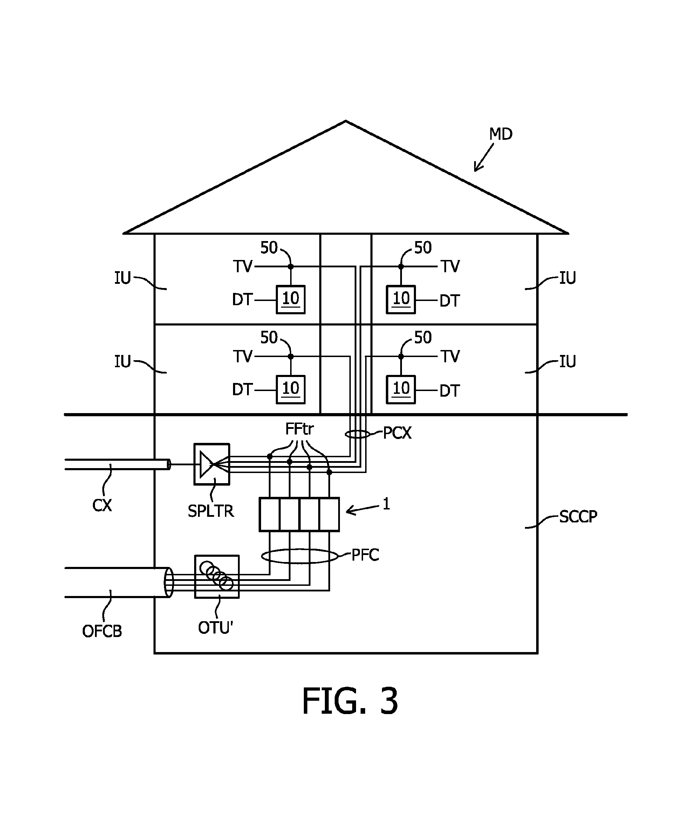

Fig. 3 shows a first multi-dwelling unit in accordance with an embodiment of the invention. This embodiment will be mainly discussed in as far as it differs from the prior art. In this embodiment it is the existing dedicated coax communication line TV (as also illustrated in Fig. 1) which is used for high-bandwidth communication similar to what has been illustrated in Fig. 2, except for the fact that now the DSLAM is completely dispensed with offering significant advantages over the prior art solutions. Alternatively, there exists a similar embodiment, wherein the dedicated phone communication line PH is used for high-bandwidth communication (as illustrated in Fig. 2). A first difference between the prior art solutions and Fig. 3 is that now an optical communication cable bundle OFCB (comprising a plurality of optical fibre cables) is routed to the shared central communication point SCCP, one optical fibre cable per individual unit IU. The optical communication cable bundle OFCB is coupled to an optical termination unit for multiple cables OTU' which is configured for terminating a plurality of optical fibre cables PFC. The optical termination unit OUT' may also be integrated into the communication device 1. This statement applies to all applicable embodiments discussion in this description. Subsequently, the plurality of optical fibre cables PFC is coupled to respective inputs of a communication device 1. Each input of the communication device 1 is associated with at maximum one output, and each output of the communication device 1 is associated with at maximum one input to obtain respective input-output couples. The consequence of this is that the required functionality between the respective inputs and outputs has been reduced to merely a media conversion (converting one communication signal using a specific protocol into another communication signal using another protocol). In this embodiment of the invention, the associations and thereby the respective input-output couples are fixed and put into separate modules, wherein each module needs to perform the same media conversion. More details on the communication device 1 will be given in the discussion of the other figures.

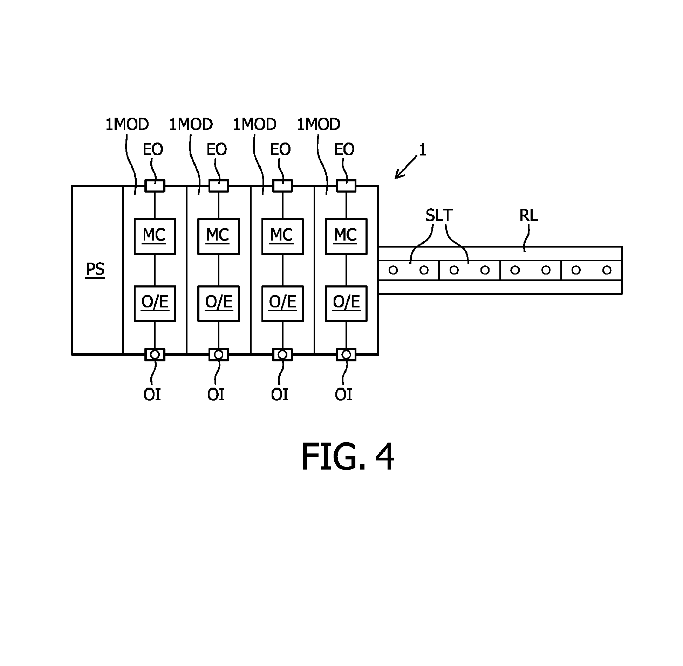

Fig. 4 shows a first communication device in accordance with an embodiment of the invention. The communication device 1 comprises mounting rail RL having slots SL onto which different modules may be mounted. A first module that is mounted is a power supply module PS, which provides power to the other modules. The power may be provided via appropriate conductive paths (not shown) in the mounting rail RL. Furthermore, there are mounted four 1-to-1 converter modules 1 MOD. The number of converter modules may be adapted in accordance with the number of individual units UI in the multi-dwelling unit MD or in accordance with the number of individual units which take the services offered. It must be noted that not all individual units necessarily do so. This statement applies to all applicable embodiments in this description. Each converter module 1 MOD comprises a respective optical input OI for being couple to a respective optical communication cable, a respective optical-to-electrical converter O/E, a media converter MC, and an electrical output EO for being couple to a dedicated 1-to-1 electrical communication line, such as a twisted-pair cable or a coax cable. One associated optical input OI and electrical output together are defined as an input-output couple.

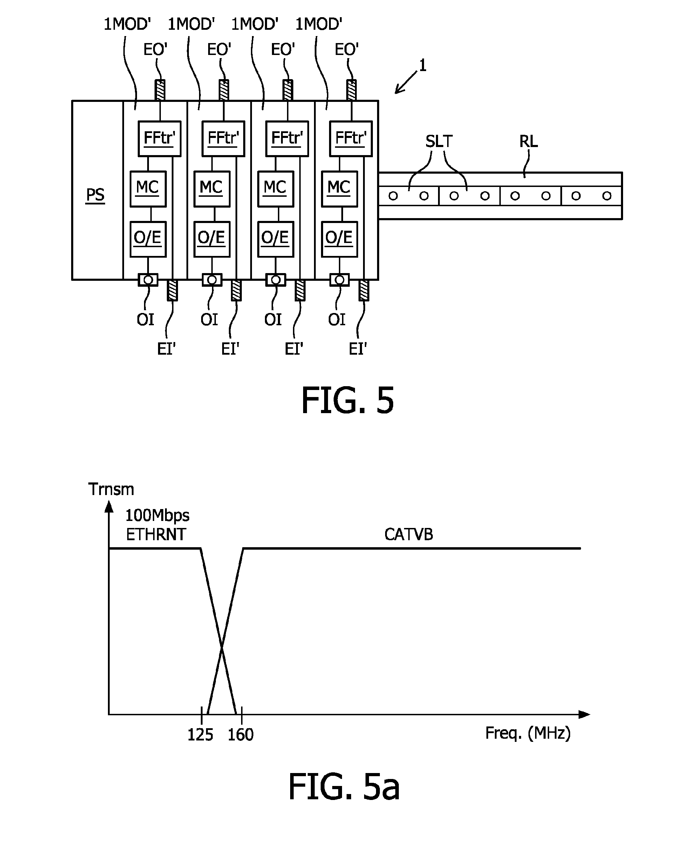

Fig. 5 shows a second communication device in accordance with another embodiment of the invention. As has already been mentioned, the coupling of the optical communication lines into the existing dedicated 1-to-1 communication lines may be done using external merger circuits (i.e. frequency filters). In the communication device 1 of Fig. 5, these mergers circuits have been integrated into the respective alternative converter modules 1MOD'. Each converter module 1MOD' now comprises, next to the respective optical input OI also an electrical input EI', which in this example is a coax connector, but this is not essential. It may also be i.e. a twisted-pair connector. The respective electrical input EI' is coupled together with the output of the media converter in respective inputs of the integrated merger circuit FFtr' (which is here a frequency filter).

Fig. 5a shows a frequency overview of an analog TV signal CATV that is merged with an Ethernet signal ETHRNT on a signal communication line. The figure shows the frequency bands (transmission Trnsm versus frequency Freq) in case of merging/splitting between 100 Mbps Ethernet ETHRNT and analog television CATV signals. CATV signals may only be used above 160MHz in this case, because of the overlapping frequency bands between 125 and 160MHz. It must be noted that it is also possible to send 1 Gbps Ethernet over a coax cable, however, CATV signals may be very difficult to merge with this Ethernet signal, because the frequency band of 1 Gbps Ethernet reaches up to 1.25 GHz.

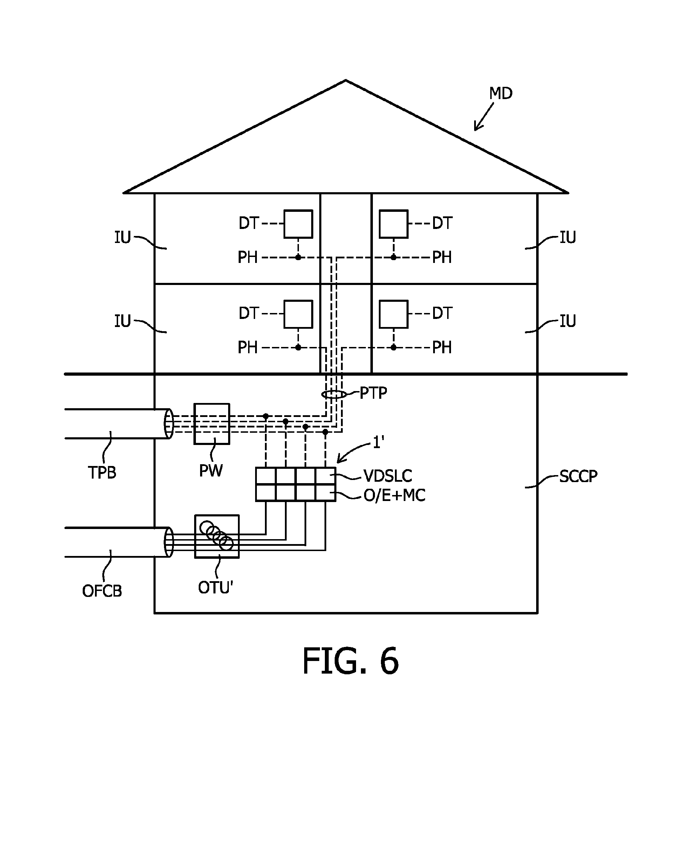

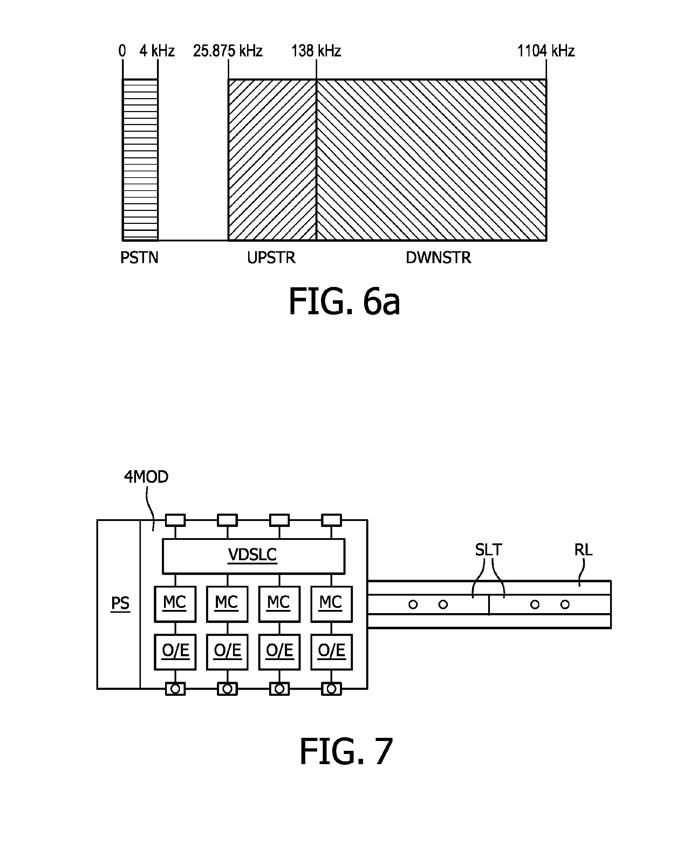

Fig. 6 shows a second multi-dwelling unit in accordance with another embodiment of the invention. This figure must be compared with Fig. 3 as far as the optical fibre cable bundle is concerned and with Fig. 2 as far as the twisted pair bundle TPB is concerned. In order to be able to couple the optical communication lines into the plurality of twisted-pair cables PTB the respective media converters must convert the signal into a VDSL signal. To this end the alternative communication device 1'in Fig. 6 is provided, next to the respective optical-to-electrical converters O/E and the respective media converters MC with respective VDSL converters VDSLC. As already mentioned the media conversion may be carried out by the VDSL converter in case such functionality is available therein. There may be provided individual VDSL converters for each converter module or such converters may be combined in larger converter modules having multiple input-output couples. This will be elaborated upon in more detail in view of some other figures.

Fig. 6a shows a frequency overview of a PSTN signal that is merged with a DSL signal over single communication line. The figure shows a the frequency bands of the PSTN signal (Public Switch Telephone Network) which ranges from 0 to 4KHz and the DSL band (upstream UPSTR and downstream DWNSTR) which ranges from 25.875 kHz to 1104 kHz. The bands do not overlap, which renders the merging and splitting of said signals relatively easy using frequency filters.

Fig. 7 shows a third communication device in accordance with another embodiment of the invention. This embodiment shows a possible implementation of the communication device of Fig. 6 and shows a 4-to-4 converter module 4MOD, wherein still each input is associated with one output only, and vice versa. VDSL converters which are available on the market typically have multiple inputs and outputs on a single chip. In the embodiment of Fig. 7 there is provided a VDSL converter VDSLC having four inputs and four outputs. The mounting rail RL in Fig. 7 has three slots SLT, which renders this embodiment of the communication device suitable for multi-dwelling units up to 12 individual units.

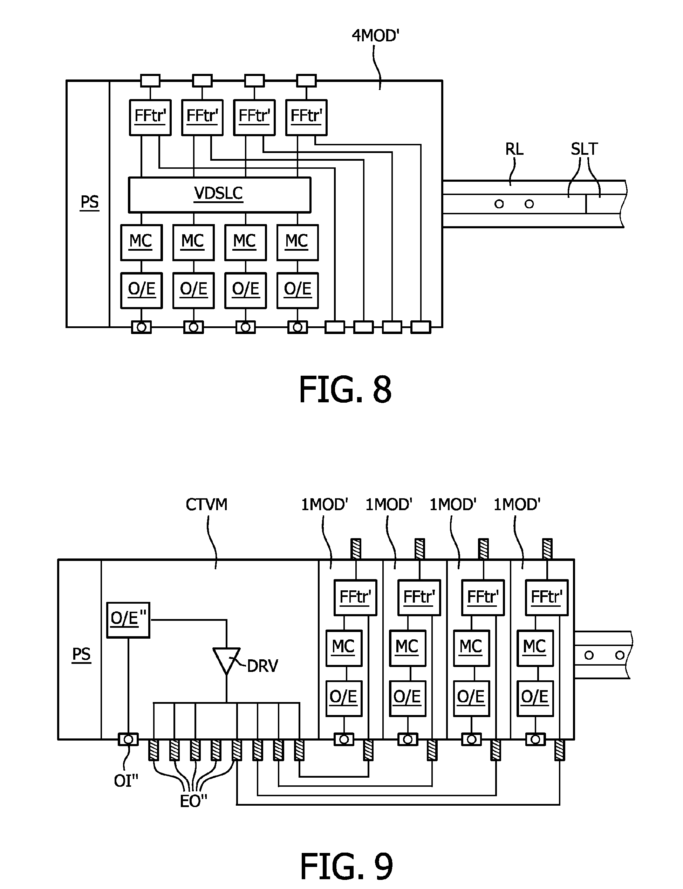

Fig. 8 shows a fourth communication device in accordance with another embodiment of the invention. The main difference between Fig. 8 and Fig. 7 is that the respective frequency filters FFtr' have been integrated in the respective converter module 4MOD similar to Fig. 5. The mounting rail RL in Fig. 8 also has three slots SLT, which renders this embodiment of the communication device suitable for multi-dwelling units up to 12 individual units.

Fig. 9 shows a fifth communication device in accordance with another embodiment of the invention. The respective converter modules are 1-to-1 converter modules 1 MOD similar to those in Fig. 5 having also electrical input which are internally merged with the media converted broadband signal originating from the optical fibre cable. In this embodiment there is provided a so-called CATV module CTVM. This module comprises a further optical input OI", a further optical-to-electrical converter O/E" coupled to the further optical input OI", an output driver DRV couple to the further optical-to-electrical converter O/E" and a plurality of further electrical outputs EO" coupled to the output driver DRV. At least part of the plurality of further electrical outputs is coupled to respective electrical inputs of the converter modules 1MOD. This may be done using external coax connections as shown in Fig. 9 or this function may be integrated in the mounting rail RL, for example. Competition in the TV provided market has resulted in companies providing analog television signals CATV to the homes via optical fibre cable (as a competitor to analog TV via coax connections). The embodiment in Fig. 9 conveniently facilitates bringing in those CATV signals into the existing dedicated 1-to-1 electrical communication lines.

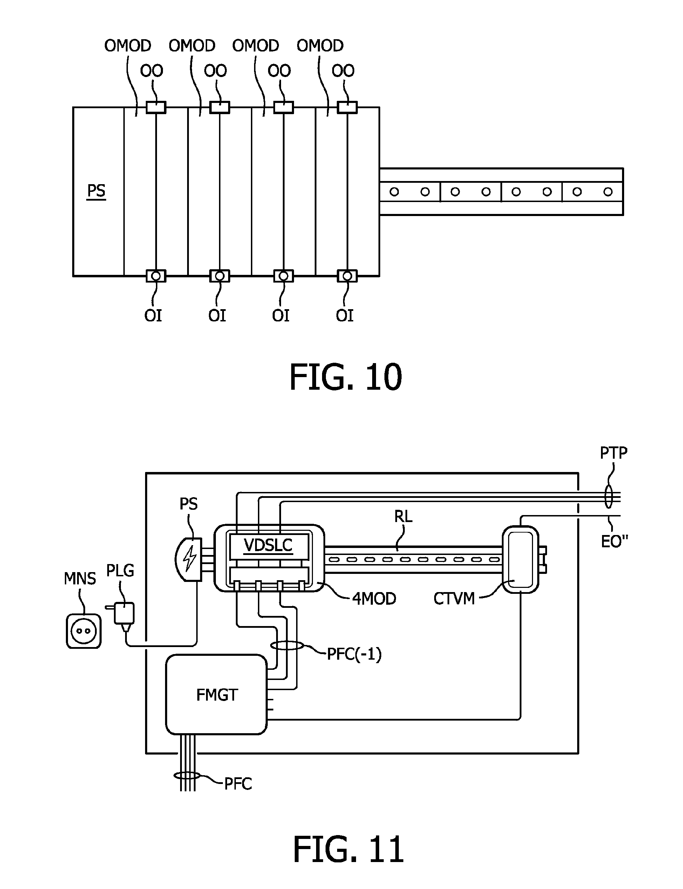

Fig. 10 shows a sixth communication device in accordance with another embodiment of the invention. In fact this embodiment illustrates a further advantage of the invention, namely that the invention is also scalable towards, real fibre-to-the-home connections. Once, the restrictions in the multi-dwelling unit MD with regards to routing optical fibre cables to the individual units IU are removed, at least some (or all) of the respective converter modules 1MOD,1MOD',4MOD,4MOD' may be simply replaced with fibre routing modules OMOD. Such fibre routing modules OMOD have respective optical outputs OO which are associated with the respective optical input OI and coupled thereto. A result is that the fibre-to-the-home upgrading effectively starts at the shared central communication point SCCP, i.e. the rest of the optical network is already there.

Fig. 11 shows a possible implementation of a connection system comprising a connection device similar to Fig. 8 and an analog CATV module similar to Fig. 9. The device is to be installed in the shared central communication point and must be connected to the mains MNS via a power plug PLG. The power is fed to the power supply module PS, which feeds power to the respective modules 4MOD and CTVM (for example via the mounting rail RL). The device in Fig. 11 further comprises a fibre management modules FMGT to which the plurality of optical fibre cables PFC is coupled. The fibre management modules FMGT comprises connectors and patch cables in order to facilitate connection between the converter modules 4MOD, CTVM and the optical fibre cables PFC. One of the optical fibre cables is routed to the CATV modules CTVM which converts the optical signal into an electrical signal on its electrical output EO". The electrical output EO" is also coupled to the respective converter module 4MOD, which is similar to the one in Fig. 8. The embodiment of Fig. 11 is just an example and by no means is the invention limited to such implementation.

In summary, the following embodiments provide a good overview of the most interesting aspects of the current invention:
1. A communication device (1, 1') for coupling a plurality of optical communication cables (PFC) into a plurality of dedicated 1-to-1 electrical communication lines (PTP, PCX) for respective individual units (IU) in a multi-dwelling unit (MD), wherein the plurality of dedicated 1-to-1 electrical communication lines (PTP, PCX) are provided between the respective individual units (IU) and a shared central connection point (SCCP) for the multi-dwelling unit (MD), the communication device (1, 1') comprising:
   - at least two optical inputs (OI), wherein each optical input (OI) is configured for being coupled to a respective one of the plurality of optical communication cables (PFC);
   - at least two electrical outputs (EO, EO'), wherein each electrical output (EO, EO') is configured for being coupled into a respective one of the plurality of dedicated 1-to-1 electrical communication line (PTP, PCX),
   wherein, in operational use, each respective optical input (OI) is associated with at maximum one of the electrical outputs (EO, EO') and each respective electrical output (EO, EO') is associated with at maximum one of the optical inputs (OI) to obtain respective associated input-output couples, and wherein between each associated input-output couple there is provided a converter circuit (O/E, MC, VDSLC) for converting a single optical input signal on the respective optical input (OI) into a single electrical output signal that is coupled to the respective electrical output (EO, EO').
2. The communication device (1, 1') as described in embodiment 1, wherein the respective associations between respective optical inputs (OI) and respective electrical outputs (EO, EO') are fixed to obtain fixed associated input-output couples.
3. The communication device (1, 1') as described in embodiment 2, wherein the communication device (1, 1') is a modular device comprising at least one converter module (1 MOD, 1 MOD', 4MOD, 4MOD'), wherein the respective converter module (1 MOD, 1 MOD', 4MOD, 4MOD') comprises at least one of the input-output couples and at least one of the converter circuits (O/E, MC, VDSLC).
4. The communication device (1, 1') as described in embodiment 3, wherein each converter circuit in the converter module (1 MOD, 1 MOD', 4MOD, 4MOD') comprises a respective optical-to-electrical converter (O/E) coupled to the respective optical input (OI) and a respective media converter (MC) coupled to a respective output of the respective optical-to-electrical converter (O/E).
5. The communication device (1, 1') as described in embodiment 4, wherein the respective converter circuit further comprises a VDSL converter (VDSLC) coupled to a respective output of the media converter (MC) for converting the signal into a VDSL signal.
6. The communication device (1, 1') as described in embodiments 3, 4 or 5, wherein the respective converter module (1 MOD, 1 MOD', 4MOD, 4MOD') comprises at least one electrical input (EI') and at least one merger circuit (FFtr'), wherein the respective merger circuit (FFtr') comprises inputs coupled to the respective electrical input (EI') and to the respective media converter (MC) for merging an electrical signal on the respective electrical input (EI) with the respective single electrical output signal.
7. The communication device (1, 1') as described in any one of the preceding embodiments, further comprising a further optical input (OI") for being coupled with a further optical communication cable carrying a CATV signal, a further optical-to-electrical converter (O/E") coupled to the further optical input (OI") and a plurality of further electrical outputs (EO") coupled to an output of the optical-to-electrical converter (O/E").
8. The communication device (1, 1') as described in embodiment 7 in as far as dependent on embodiment 6, wherein at least one of the further electrical outputs (EO") is coupled to a respective electrical input (EI') of a respective converter module (1 MOD, 1 MOD', 4MOD, 4MOD').
9. The communication device (1, 1') as described in any one of embodiments 3 to 8 in as far as directly or indirectly dependent on embodiment 3, wherein the converter module (1MOD, 1 MOD') comprises one input-output couple and one converter circuit (O/E, MC).
10. The communication device (1, 1') as described in any one of embodiments 3 to 8 in as far as directly or indirectly dependent on embodiment 3, wherein the converter module (4MOD, 4MOD') comprises four input-output couples and four converter circuits (O/E, MC).
11. The communication device (1, 1') as described in any one of embodiments 3 to 10 in as far as directly or indirectly dependent on embodiment 3, further comprising a power supply module (PS) for supplying power to the plurality of converter modules (1 MOD, 1 MOD', 4MOD, 4MOD').
12. The communication device (1, 1') as described in any one of embodiments 3 to 11 in as far as directly or indirectly dependent on embodiment 3, further comprising an optical fibre routing module (OMOD) having an optical input (OI) for being coupled to a further respective one of the plurality of optical communication cables (PFC), and an optical output (OO) associated with the optical input (OI), wherein the optical input (OI) is coupled to the optical output (OO).
13. The communication device (1, 1') as described in any one of embodiments 3 to 10 in as far as directly or indirectly dependent on embodiment 3, further comprising a mounting rail (RL) having slots (SLT) onto which the respective converter modules (56, 83) are mounted.
14. The communication device (1, 1') as described in embodiment 6, wherein respective ones of the at least one electrical input (EI') are selected from a twisted-pair connector and a coax connector.
15. The communication device (1, 1') as described in any one of embodiments 3 to 14, in as far as directly or indirectly dependent on embodiment 3, wherein the number of input-output couples is between 2 and 20, and preferably between 2 and 12.
16. A connection system for a multi-dwelling unit (MD) comprising a plurality of individual units (IU), the connection system comprising:
   - a plurality of dedicated 1-to-1 electrical communication lines (PTP, PCX) between a shared central communication point (SCCP) and the respective individual units (IU) of the multi-dwelling unit (MD);
   - a plurality of optical communication cables (PFC);
   - the communication device (1, 1') as described in any one of the preceding embodiments, wherein the communication device (1, 1') is configured for coupling the plurality of optical communication cables (PFC) into the plurality of dedicated 1-to-1 electrical communication lines (PTP, PCX).
17. The connection system as described in embodiment 16, wherein the coupling of the plurality of optical communication cables (PFC) into the plurality of dedicated 1-to-1 electrical communication lines (PTP, PCX) is done via respective merger circuits (FFtr') in the communication device (1, 1'), if present, or else, being provided as external components (FFtr).
18. A multi-dwelling unit (MD) comprising the communication device (1, 1') as described in any one of embodiments 1 to 15.
19. A method of upgrading a multi-dwelling unit (MD) comprising a plurality of individual units (IU), wherein the multi-dwelling unit (MD) comprises a shared central communication point (SCCP) having a plurality of dedicated 1-to-1 electrical communication lines (PTP, PCX) coupled to the respective individual units (IU), the method comprising:
   - providing and routing a plurality of optical communication cables (OFCB) to the central communication point (SCCP);
   - providing the communication device (1, 1') as described in any one of embodiments 1 to 15;
   - coupling the plurality of optical communication cables (PFC) into the optical inputs (OI) of the communication device (1, 1'), and
   - coupling the electrical outputs (EO, EO') of the communication device (1, 1') into the respective electrical communication lines (PTP, PCX).
20. The method as described in embodiment 19, further comprising:
   - providing a plurality of external merger circuits (FFtr) in case not present as internal merger circuits (FFtr') in the communication device (1, 1'),
wherein the coupling of the electrical outputs (EO, EO') of the communication device (1, 1') into the respective electrical communication lines (PTP, PCX) is done via the respective internal (FFtr') or external merger circuits (FFtr).

A lot of variations of the discussed embodiments are possible. A few are here explicitly mentioned. The number of modules may be varied; the number of input-output couples per converter module, different converter modules may be mounted to the same mounting rail. It must be noted that it is also possible that the invention is used there, where the existing service contract over the dedicated 1-to-1 electrical communication line is terminated. In such scenario the respective merger circuits may no longer be necessary for coupling the electrical outputs of the communication device into the dedicated lines. Instead, the 1-to-1 dedicated line may be routed directly from the electrical outputs towards the individual units in the multi-dwelling unit.

The invention may be applied in various applications, but in particular in the building and upgrading of multi-dwelling units by providing high-bandwidth communication lines over dedicated 1-to-1 electrical communication lines such as coax cable, Ethernet cables, and twisted-pair cables.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements. In the device claim enumerating several means, several of these means may be embodied by one and the same item of hardware. The mere fact that certain measures are recited in mutually different dependent claims does not indicate that a combination of these measures cannot be used to advantage.

## Claims

1. A communication device (1, 1') for coupling a plurality of optical communication cables (PFC) into a plurality of dedicated 1-to-1 electrical communication lines (PTP, PCX) for respective individual units (IU) in a multi-dwelling unit (MD), wherein the plurality of dedicated 1-to-1 electrical communication lines (PTP, PCX) are provided between the respective individual units (IU) and a shared central connection point (SCCP) for the multi-dwelling unit (MD), the communication device (1, 1') comprising:
- at least two optical inputs (OI), wherein each optical input (OI) is configured for being coupled to a respective one of the plurality of optical communication cables (PFC);
- at least two electrical outputs (EO, EO'), wherein each electrical output (EO, EO') is configured for being coupled into a respective one of the plurality of dedicated 1-to-1 electrical communication line (PTP, PCX),
wherein, in operational use, each respective optical input (OI) is associated with at maximum one of the electrical outputs (EO, EO') and each respective electrical output (EO, EO') is associated with at maximum one of the optical inputs (OI) to obtain respective associated input-output couples, and wherein between each associated input-output couple there is provided a converter circuit (O/E, MC, VDSLC) for converting a single optical input signal on the respective optical input (OI) into a single electrical output signal that is coupled to the respective electrical output (EO, EO').

2. The communication device (1, 1') as described in claim 1, wherein the respective associations between respective optical inputs (OI) and respective electrical outputs (EO, EO') are fixed to obtain fixed associated input-output couples.

3. The communication device (1, 1') as described in claim 2, wherein the communication device (1, 1') is a modular device comprising at least one converter module (1 MOD, 1 MOD', 4MOD, 4MOD'), wherein the respective converter module (1 MOD, 1 MOD', 4MOD, 4MOD') comprises at least one of the input-output couples and at least one of the converter circuits (O/E, MC, VDSLC).

4. The communication device (1, 1') as described in claim 3, wherein each converter circuit in the converter module (1 MOD, 1 MOD', 4MOD, 4MOD') comprises a respective optical-to-electrical converter (O/E) coupled to the respective optical input (OI) and a respective media converter (MC) coupled to a respective output of the respective optical-to-electrical converter (O/E).

5. The communication device (1, 1') as described in claim 4, wherein the respective converter circuit further comprises a VDSL converter (VDSLC) coupled to a respective output of the media converter (MC) for converting the signal into a VDSL signal.

6. The communication device (1, 1') as described in claims 3, 4 or 5, wherein the respective converter module (1 MOD, 1 MOD', 4MOD, 4MOD') comprises at least one electrical input (EI') and at least one merger circuit (FFtr'), wherein the respective merger circuit (FFtr') comprises inputs coupled to the respective electrical input (EI') and to the respective media converter (MC) for merging an electrical signal on the respective electrical input (EI) with the respective single electrical output signal.

7. The communication device (1, 1') as described in any one of the preceding claims, further comprising a further optical input (OI") for being coupled with a further optical communication cable carrying a CATV signal, a further optical-to-electrical converter (O/E") coupled to the further optical input (OI") and a plurality of further electrical outputs (EO") coupled to an output of the optical-to-electrical converter (O/E").

8. The communication device (1, 1') as described in claim 7 in as far as dependent on claim 6, wherein at least one of the further electrical outputs (EO") is coupled to a respective electrical input (EI') of a respective converter module (1 MOD, 1 MOD', 4MOD, 4MOD').

9. The communication device (1, 1') as described in any one of claims 3 to 8 in as far as directly or indirectly dependent on claim 3, wherein the converter module (1 MOD, 1 MOD') comprises one input-output couple and one converter circuit (O/E, MC).

10. The communication device (1, 1') as described in any one of claims 3 to 8 in as far as directly or indirectly dependent on claim 3, wherein the converter module (4MOD, 4MOD') comprises four input-output couples and four converter circuits (O/E, MC).

11. The communication device (1, 1') as described in any one of claims 3 to 10 in as far as directly or indirectly dependent on claim 3, further comprising a power supply module (PS) for supplying power to the plurality of converter modules (1 MOD, 1 MOD', 4MOD, 4MOD').

12. The communication device (1, 1') as described in any one of claims 3 to 11 in as far as directly or indirectly dependent on claim 3, further comprising an optical fibre routing module (OMOD) having an optical input (OI) for being coupled to a further respective one of the plurality of optical communication cables (PFC), and an optical output (OO) associated with the optical input (OI), wherein the optical input (OI) is coupled to the optical output (OO).

13. The communication device (1, 1') as described in any one of claims 3 to 10 in as far as directly or indirectly dependent on claim 3, further comprising a mounting rail (RL) having slots (SLT) onto which the respective converter modules (56, 83) are mounted.

14. The communication device (1, 1') as described in any one of claims 3 to 13, in as far as directly or indirectly dependent on claim 3, wherein the number of input-output couples is between 2 and 20, and preferably between 2 and 12.

15. A connection system for a multi-dwelling unit (MD) comprising a plurality of individual units (IU), the connection system comprising:
- a plurality of dedicated 1-to-1 electrical communication lines (PTP, PCX) between a shared central communication point (SCCP) and the respective individual units (IU) of the multi-dwelling unit (MD);
- a plurality of optical communication cables (PFC);
- the communication device (1, 1') as described in any one of the preceding embodiments, wherein the communication device (1, 1') is configured for coupling the plurality of optical communication cables (PFC) into the plurality of dedicated 1-to-1 electrical communication lines (PTP, PCX).

16. A method of upgrading a multi-dwelling unit (MD) comprising a plurality of individual units (IU), wherein the multi-dwelling unit (MD) comprises a shared central communication point (SCCP) having a plurality of dedicated 1-to-1 electrical communication lines (PTP, PCX) coupled to the respective individual units (IU), the method comprising:
- providing and routing a plurality of optical communication cables (OFCB) to the central communication point (SCCP);
- providing the communication device (1, 1') as described in any one of claims 1 to 14;
- coupling the plurality of optical communication cables (PFC) into the optical inputs (OI) of the communication device (1, 1'), and
- coupling the electrical outputs (EO, EO') of the communication device (1, 1') into the respective electrical communication lines (PTP, PCX).
